# EUROPEAN PATENT SPECIFICATION

(11) **EP 3 969 354 B1**
(45) Date of publication and mention of the grant of the patent: **07.06.2023**
(21) Application number: 20727740.1
(22) Date of filing: 13.05.2020
(51) Int. Cl.: B62D 25/16, B62D 35/00

(54) **LOW DRAG REAR WHEEL BAY**
HINTERRADBUCHT MIT GERINGEM WIDERSTAND
PUITS DE ROUE ARRIÈRE À FAIBLE TRAÎNÉE

(30) Priority: 15.05.2019 NL 2023140
(43) Date of publication of application: 23.03.2022
(73) Proprietor: DAF Trucks N.V., 5643 TW Eindhoven (NL)
(72) Inventor: VAN DEN HEIJKANT, Rob Adrianus Johannes, 5643 TW Eindhoven (NL); VAN DIJK, Niek Jan Gerard, 5643 TW Eindhoven (NL); RENTEMA, Date Willem Egbert, 5643 TW Eindhoven (NL); KRUIJSSEN, Frouke, 5643 TW Eindhoven (NL); VAN NESSELROOIJ, Michiel, 5643 TW Eindhoven (NL)
(74) Representative: V.O.
(86) International application number: PCT/NL2020/050302
(87) International publication number: WO 2020/231255

(56) References cited:
- EP-A1- 0 233 496
- EP-A1- 1 028 027
- EP-B1- 0 233 496
- WO-A1-2004/078561
- DE-A1- 4 309 100
- DE-C2- 4 309 100
- GB-A- 2 151 569

## Description

### BACKGROUND OF THE INVENTION

The present invention relates to the reduction of induced aerodynamic drag of heavy goods vehicles known as trucks. More particular, the invention relates to a rounded wheel enclosure. Such enclosures, also known as fenders, follow the shape of a wheel of a truck and usually have a rounded outer circumferential surface. An example of such a rounded wheel enclosure can be seen in EP 0 233 496 A1.

Since the outer surface is exposed to travel wind, the rounded shape affects the direction of the wind and increased the induced aerodynamic drag. The object of the invention is to reduce the drag of such a rounded wheel enclosure.

### SUMMARY OF THE INVENTION

According to an aspect of the invention, the outer surface guides travel wind along its shape in a longitudinal direction of the wheel enclosure. The outer surface has an extending portion in a transition area behind an apex of the circumferential surface of the wheel enclosure. The extending portion supports a sharp edge extending transverse to the longitudinal direction. The extending portion directs airflow away from the circumferential surface of the wheel enclosure along the longitudinal direction and the sharp edge separates airflow from following the extending portion further. According to the invention the said upstanding edge separates airflow along the truck side from following the shape of the side surface of the extending portion.

The device is particularly suitable for the reduction of the drag induced by the interaction of the truck of and it's trailer with specific reference to the rear axle wheel bay and how it creates drag when a trailer is used.

Without being bounded to the theory, but for clarifying purposes of the underlying concept, the claimed wheel bay reduces the air pressure drop between the truck and the trailer of a truck by directing the air flowing over the wheel enclosure in between the truck and the trailer by the extending portion described here above. Such a reduced pressure drop improves the airflow along the outer side of the truck by sucking in less air from the outer sides of the truck.

### BRIEF DESCRIPTION OF THE DRAWINGS

The invention is further described with reference to the drawings wherein:
Figure 1 shows a wheel bay enclosure according to an embodiment of the invention;
Figures 2A and 2B show a schematic prior art arrangement;
Figure 3 shows an embodiment with the truck and trailer;
Figure 4 shows an alternative embodiment of the invention
Figure 5 shows the invention integrated in a conventional wheel enclosure;
Figure 6 shows an isometric view of a further embodiment of the invention;
Figures 7A and 7B show the change in the flow direction due to the invention;

### DETAILED DESCRIPTION

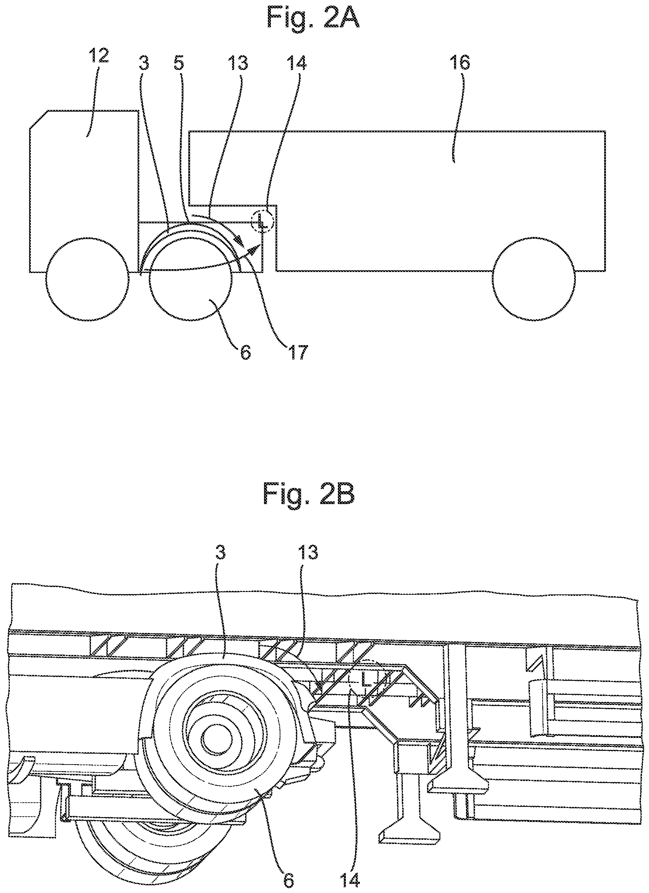

The invention provides for a rounded wheel enclosure 3 following the shape of a truck wheel 6. The wheel enclosure's outer surface 7 is rounded along it's circumference to guide traveling air 8 or wind that is flowing over the wheel enclosure 3 in a longitudinal direction of a truck, also shown in figure 2. The wheel enclosure's 3 outer surface 7 has an extending portion 4 in an area behind the upper most portion 5 of the wheel enclosure 3, also called the apex of the circumferential surface 7. The extending portion 4 has a sharp edge 1 that extends transverse to the longitudinal direction of the truck. The extending portion 4 directs airflow 8 away from the circumferential surface 7 of the wheel enclosure 3. When the air flow 8 moves over the sharp lateral edge 1, the airflow separates from the extending portion 4. Once the airflow 8 has been directed away from the wheel enclosure it flows in a generally longitudinal direction of the truck. By directing the air away from following the shape of the wheel and separating the air from the enclosure, the wheel enclosure drag is reduced.

The extending portion 4, in addition, has a top surface 9 extending behind the apex 5 of the wheel enclosure 3. The top surface 9 connects the apex 5 to the lateral sharp edge 1. The extending portion 4 of the wheel enclosure 3 has a side surface 10 and an upstanding sharp edge 2 in the plane of the truck side. Side surface 10 connects the wheel enclosure 3 with the upstanding sharp edge 2. The top and side surfaces further reduce the wheel enclosure drag by directing the air flow away from the wheel enclosure more efficiently.

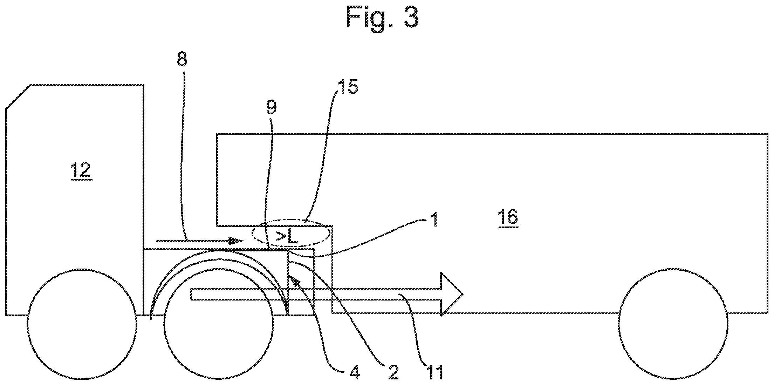

Figure 2A shows the truck 12 with an attached trailer 16 and the area behind the apex 5 of the wheel enclosure 3 directing airflow 8 between the truck 12 and the trailer 16. Figure 2B shows a more detailed view of the trucks bottom rear side, with wheel enclosure 3 enclosing wheel 6. From Figures 2A and 2B it becomes clear that airflow 13 follows the shape of the wheel enclosure 3 downstream of the apex 5 in the absence of an extending portion as depicted in Figure 3 below.

In Figure 3, according to an embodiment, airflow 8 increases the air pressure in a zone 15 between the truck 12 and the trailer 16 when compared to a lower pressure zone 14 of Figure 2A. The upstanding sharp edge 2 of the wheel enclosure 3 separates airflow 11 along the truck side from following the shape of the wheel enclosure 3 in a lateral direction relative to the longitudinal direction of the truck as shown in figure 2B. In contrast, in Figure 2 airflow 17 does not benefit from the extending portion 4 with sharp edge 2 and is sucked into the lower pressure zone 14 which creates increased wheel enclosure drag.

Top surface 9 connects the wheel enclosure apex with the lateral sharp edge 2. The top surface 9 and side 10 surfaces further reduce wheel enclosure drag by streamlining the airflow 8 and 11 before reaching the lateral sharp edge 1 and upstanding sharp edge 2.

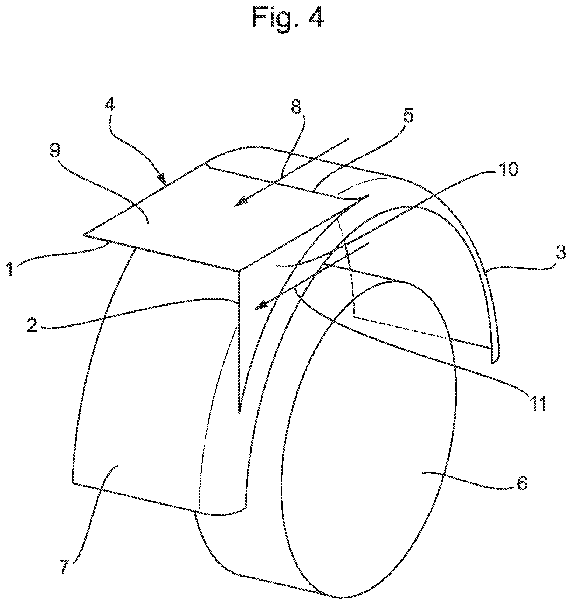

In figure 4 it is shown that the lateral edge 1 and upstanding edge 2 may be supported without an upstanding portion. In the specified example, lateral edge 1 and upstanding edge 2 are supported only by top surface 9 and side surface 10 of the extending portion 4. By omitting the upstanding portion the top and side surfaces can still direct air flow away from the wheel enclosure 3 and the lateral edge 1 and upstanding edge 2 can still separate the air flow from the wheel enclosure. The top surface 9 and side surface 10 are more robust and rigid when supported by an upstanding portion.

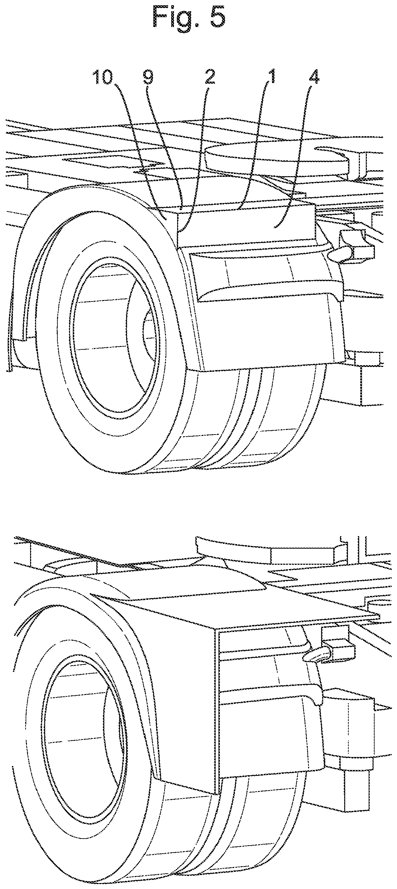

In figure 5 another aspect of the invention is shown where the extending portion 4 with side surface 10 and top surface 9 may be integrated with the surface of the wheel enclosure 3 to create a single component wheel enclosure with the lateral sharp edge 1 and upstanding sharp edge 2 as shown in figure 5. The integration of the extending portion 4, top surface 9 and surface side 10 with the wheel enclosure 3 reduces the costs of manufacturing the invention.

In another aspect of the invention the extending portion 4 can be (retro) fitted to a rounded wheel enclosure and attached to the surface of the said enclosure 3. This enables the retro fitment of the invention to existing trucks that have conventional rounded wheel enclosures without requiring the replacement of the entire wheel enclosure.

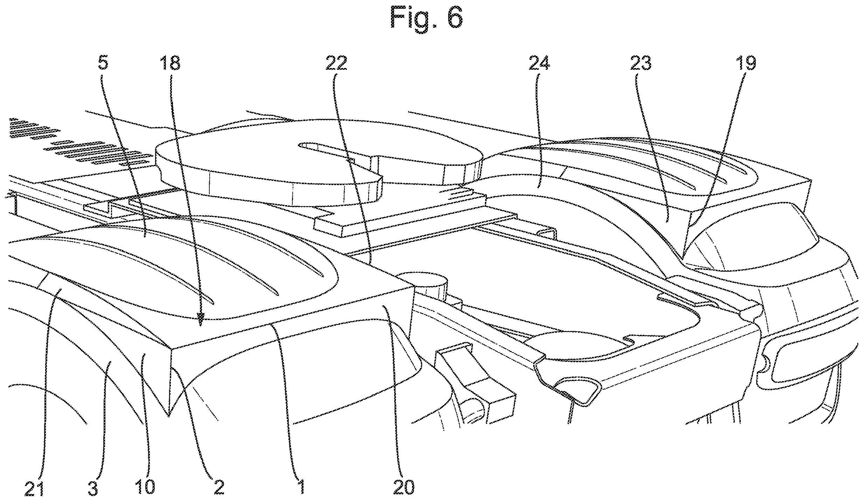

In Figure 6 an isometric view of a further embodiment of the invention is shown. An extending component 18 which may be retrofitable to or integratable with a wheel enclosure which has the top surface 9, the side surface 10, a back surface 20 and an inner side surface 23. The top surface 9 extends behind the apex 5 of the wheel enclosure 3. The top surface 9 connects the apex 5 to the lateral sharp edge 1. The extending portion 18 of the wheel enclosure 3 has a side surface 10 and an upstanding sharp edge 2 in the plane of the truck side. The side surface 10 connects the wheel enclosure 3 with the upstanding sharp edge 2. The extending potion 18 may have an inner side surface 23 which connects an inner side surface 24 of the wheel enclosure 3 with an inner upstanding edge 19. The top, side and inner side surfaces further reduce the wheel enclosure drag by directing the air flow away from the wheel enclosure more efficiently.

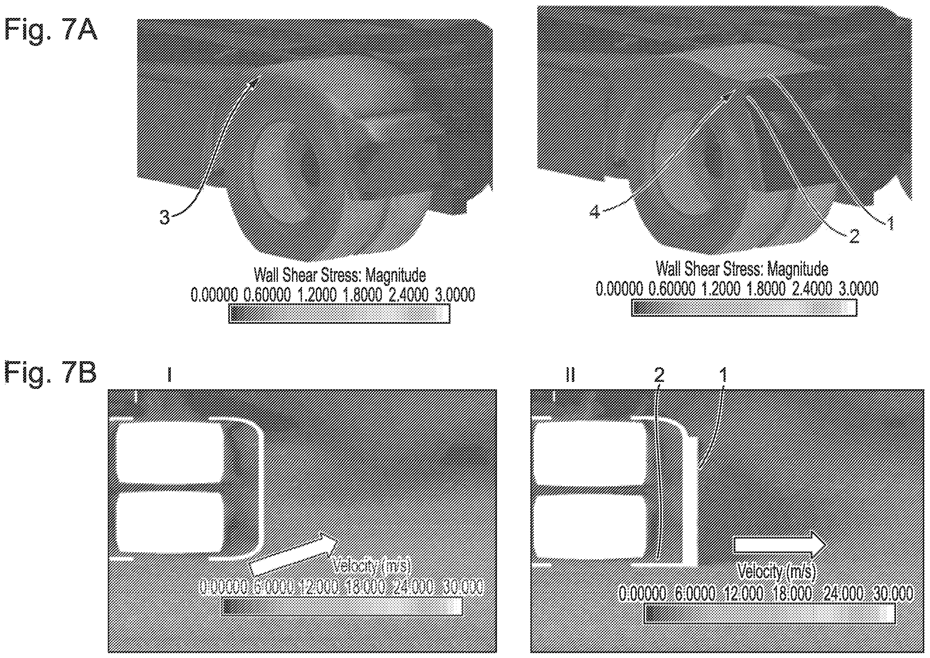

In Figure 7A wall shear stress magnitudes are shown for a conventional wheel enclosure (left) and for a modified wheel enclosure (right) according to the invention. In Figure 7B, it is shown that and the velocity of the air flow behind the wheel enclosure is reduced when the wheel enclosure is equipped with both the lateral edge 1 and the upstanding edge 2 and the velocity direction is diverted from an inward direction (I) to a longitudinal direction (II) along a length of the truck.

### Alternative embodiments

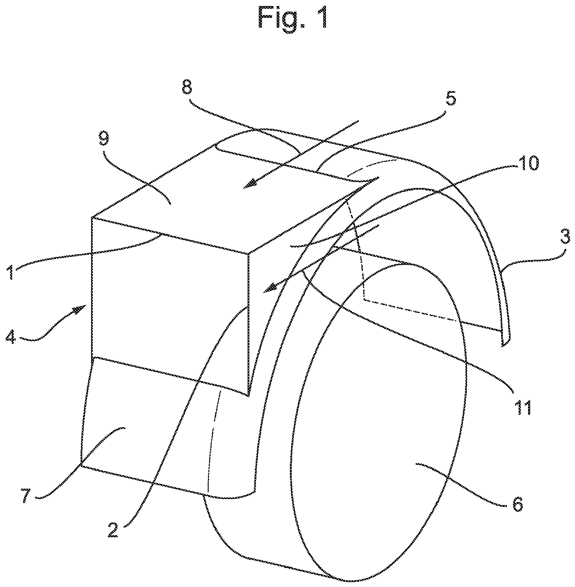

An alternative implementation of the invention is the wheel enclosure with the transverse edge supported by the top surface and the upstanding edge supported by the side surface, as shown in figure 1, attached to or incorporated into the wheel enclosure.

An alternative implementation of the invention the wheel enclosure has the extending portion and the top surface supporting the transverse edge and the upstanding edge supported by the side surface and the extending portion, as shown in figure 2, attached to or incorporated into the wheel enclosure.

## Claims

1. A rounded wheel enclosure (3) following the shape of a wheel (5) of a truck (12) having a rounded outer circumferential surface (7) for guiding travel wind along a longitudinal direction (II) of the wheel enclosure (3), wherein the outer circumferential surface comprises an extending portion (18) in a transition area behind an apex (5) of the circumferential surface (7), said extending portion (18) comprising a lateral edge (1) extending transverse to the longitudinal direction (II) wherein the said extending portion (18) directs airflow away from the circumferential surface of the wheel enclosure along the longitudinal direction (II) and wherein said lateral edge (1) separates airflow from following the curvature of the said wheel enclosure (3), wherein the extending portion (18) comprises a top surface (9) extending behind the apex (5) of the wheel enclosure (3) connecting the apex (5) of the wheel enclosure (3) to the lateral edge (1) and, wherein the extending portion (18) further comprises a side surface (24) and an upstanding edge (2) in the plane of a truck side wherein the said side surface (24) connects the said wheel enclosure (3) with the said upstanding edge (2), **characterized in that** the said upstanding edge (2) separates airflow along the truck side from following the shape of the side surface of the extending portion (18).

2. A wheel enclosure, according to claim 1, wherein the said extending portion (18) is integrated with the surface of the said enclosure (3).

3. A wheel enclosure, according to claim 1, wherein the extending portion (18) is attached to the surface of the said enclosure (3).

## Patentansprüche

1. Abgerundete Radabdeckung (3), die der Form eines Rads (5) eines Lastkraftwagens (12) folgt und eine abgerundete äußere Umfangsfläche (7) zum Leiten von Fahrtwind entlang einer Längsrichtung (II) der Radabdeckung (3) aufweist, wobei die äußere Umfangsfläche einen Erstreckungsabschnitt (18) in einem Übergangsbereich hinter einem Scheitelpunkt (5) der Umfangsfläche (7) umfasst, wobei der Erstreckungsabschnitt (18) eine Seitenkante (1) umfasst, die sich quer zur Längsrichtung (II) erstreckt, wobei der Erstreckungsabschnitt (18) den Luftstrom von der Umfangsfläche der Radabdeckung entlang der Längsrichtung (II) wegleitet, und wobei die Seitenkante (1) den Luftstrom davon trennt, der Krümmung der Radabdeckung (3) zu folgen, wobei der Erstreckungsabschnitt (18) eine obere Oberfläche (9) umfasst, die sich hinter dem Scheitelpunkt (5) der Radabdeckung (3) erstreckt und den Scheitelpunkt (5) der Radabdeckung (3) mit der Seitenkante (1) verbindet, und wobei der Erstreckungsabschnitt (18) ferner eine Seitenfläche (24) und eine aufrechtstehende Kante (2) in der Ebene einer Lastkraftwagenseite umfasst, wobei die Seitenfläche (24) die Radabdeckung (3) mit der aufrechtstehenden Kante (2) verbindet, **dadurch gekennzeichnet, dass** die aufrechtstehende Kante (2) den Luftstrom entlang der Lastkraftwagenseite davon trennt, der Form der Seitenfläche des Erstreckungsabschnitts (18) zu folgen.

2. Radabdeckung nach Anspruch 1, wobei der Erstreckungsabschnitt (18) an der Oberfläche der Abdeckung (3) integriert ist.

3. Radabdeckung nach Anspruch 1, wobei der Erstreckungsabschnitt (18) an der Oberfläche der Abdeckung (3) angebracht ist.

## Revendications

1. Enceinte de roue arrondie (3) suivant la forme d'une roue (5) d'un camion (12) ayant une surface circonférentielle extérieure arrondie (7) pour guider le vent de déplacement le long d'une direction longitudinale (II) de l'enceinte de la roue (3), dans laquelle la surface circonférentielle extérieure comprend une partie d'extension (18) dans une zone de transition derrière un sommet (5) de la surface circonférentielle (7), ladite partie d'extension (18) comprenant un bord latéral (1) s'étendant transversalement à la direction longitudinale (II), dans lequel ladite partie d'extension (18) dirige le flux d'air à l'écart de la surface circonférentielle de l'enceinte de la roue le long de la direction longitudinale (II) et dans lequel ledit bord latéral (1) empêche le flux d'air de suivre la courbure de ladite enceinte de roue (3), dans laquelle la partie d'extension (18) comprend une surface supérieure (9) s'étendant derrière le sommet (5) de l'enceinte de roue (3) reliant le sommet (5) de l'enceinte de roue (3) au bord latéral (1) et, dans lequel la partie d'extension (18) comprend en outre une surface latérale (24) et un bord vertical (2) dans le plan d'un côté du camion, dans lequel ladite surface latérale (24) relie ladite enceinte de roue (3) audit bord vertical (2), **caractérisée en ce que** ledit bord vertical (2) empêche le flux d'air le long du côté du camion de suivre la forme de la surface latérale de la partie d'extension (18).

2. Enceinte de roue selon la revendication 1, dans lequel ladite partie d'extension (18) est intégrée à la surface de ladite enceinte (3).

3. Enceinte de roue selon la revendication 1, dans lequel la partie d'extension (18) est fixée à la surface de ladite enceinte (3).
